# EUROPEAN PATENT SPECIFICATION

(11) **EP 0 728 151 B1**
(45) Date of publication and mention of the grant of the patent: **21.03.2001**
(21) Application number: 95901744.3
(22) Date of filing: 03.11.1994
(51) Int. Cl.: C08F 2/34, C08F 4/648, C08F 10/02

(54) **PROCESS FOR THE POLYMERIZATION OR COPOLYMERIZATION OF ETHYLENE**
VERFAHREN ZUR POLYMERISIERUNG ODER COPOLYMERISIERUNG VON ETHYLEN
PROCEDE DE POLYMERISATION OU DE COPOLYMERISATION D'ETHYLENE

(30) Priority: 08.11.1993 US 148309; 18.11.1993 US 154069
(43) Date of publication of application: 28.08.1996
(73) Proprietor: MOBIL OIL CORPORATION, Fairfax, Virginia 22037-0001 (US)
(72) Inventor: CHERUVU, Subrahmanyam, Robbinsville, NJ 08691 (US); LO, Frederick, Yip-Kwai, Edison, NJ 08818 (US); ONG, Shimay, Christine, Warren, NJ 07059 (US)
(74) Representative: Hucker, Charlotte Jane
(86) International application number: US9412586
(87) International publication number: WO9513305

(56) References cited:
- EP-A- 0 515 132
- EP-A- 0 634 421
- WO-A-94/03509
- WO-A-94/14855
- US-A- 4 536 484
- US-A- 4 794 096
- US-A- 4 912 075
- US-A- 4 931 517
- US-A- 5 030 700
- US-A- 5 206 199
- US-A- 5 332 706

## Description

This invention relates to a process for the polymerization or copolymerization of ethylene.

Polyethylene is produced commercially in a gas phase reaction in the absence of solvents by employing selected chromium and titanium-containing catalysts under specific operating conditions in a fluid bed process. Polyethylene products of such commercial processes exhibit medium-to-broad molecular weight distribution. To be commercially useful in the gas phase fluid bed process, or a slurry reactor process, undertaken at low pressures, e.g. of less than about 1000 psi, the catalyst must exhibit high activity, with concomitant high catalyst productivity, because these process systems do not include catalyst residue removal procedures. Accordingly, catalyst residue in the polymer product must be so small that it can be left in the polymer without causing any undue problems in the fabrication and/or to the ultimate consumer.

The need for new catalysts lead to the development of metallocene compounds of transition metals as catalysts for polymerization and copolymerization of ethylene. Metallocenes can be described by the empirical formula CpₘMAₙBₚ. These compounds in combination with alumoxane have been used to produce olefin polymers and copolymers, such as ethylene and propylene homopolymers, ethylene-butene and ethylene-hexene copolymers: see, for example US-A-4542199 and US-A-4404344.

Methylalumoxane (MAO) is commonly used as co-catalyst with metallocene catalysts. It belongs to the class of alumoxanes which comprises oligomeric linear and/or cyclic alkylalumoxanes represented by the formula:
R-(Al(R)-O)ₙ-AlR₂ for oligomeric, linear alumoxanes and (-Al(R)-O-)ₘ for oligomeric cyclic alumoxane
wherein n is 1-40, preferably 10-20, m is 3-40, preferably 3-20 and R is a C₁-C₈ alkyl group and preferably methyl.

Methylalumoxane is commonly produced by reacting trimethylaluminum with water or with hydrated inorganic salts, such as CuSO,.5H₂O or Al₂(SO₄)₃.5H₂. Methylalumoxane can be also generated in situ in polymerization reactors by adding to them trimethylaluminum and water or water-containing inorganic salts. MAO is a mixture of oligomers with a very wide distribution of molecular weights and usually with an average molecular weight of about 1200. MAO is typically kept in solution in toluene. While the MAO solutions remain liquid at fluid bed reactor temperatures, the MAO itself is a solid at room temperature.

Most of the experiments reported in the literature relating to methylalumoxane used as a cocatalyst with metallocene catalysts are undertaken in a slurry or solution process, rather than in a gas phase fluid bed reactor process.

It is desirable to control the MI of the polymerisation products, because such control provides a method of meeting target molecular weights, which vary for different applications. Generally, a low MI product is used for producing tough films. However, depending on the fabrication means and method, polyethylene (and its copolymers) of different MI will be required. For example for blown film production, the polyethylene target MI ranges from 0.6 to about 2. By comparison, for case film production the polyethylene target MI ranges from 2.5 to 3.5. When the application is injection moulding, and target MI ranges up to 150, usually from 10 to 120, hydrogen may be used to control MI.

The present invention is predicated upon the discovery that certain reagents can alter the MI of the polymerized product:
more specifically, isopentane and electron donating compounds lead to a decrease in MI; and water and electron withdrawing compounds leads to an increase in MI.

This discovery enables control of the polymerization process to adjust MI.

According to the present invention, there is provided a process for the polymerization of ethylene or the copolymerization of ethylene with an alpha-olefin of 3 to 10 carbon atoms, which produces resin having a MI (g/10 min.) value in the range of 0.0001 to 500, (wherein MI is measured in accordance with ASTM D-1238, condition E), as defined in claim 1.

In one embodiment the reagent is isopentane and/or an electron donating compound to decrease the MI of the polymerized product. Preferably, the isopentane is used at a partial pressure of from 2 to 80 psi (14 to 550 KPa).

Preferably, the electron donating compound is used in an amount ranging from 0.01 to 500 ppm molar ratio to ethylene.

Desirably, the electron donating compound is selected from the group consisting of oxygen, carbon monoxide and carbon dioxide.

It is preferred that the isopentane is co-fed with the electron donating compound, which is selected from the group consisting of oxygen, carbon monoxide and carbon dioxide.

In another embodiment the reagent is water and/or an electron withdrawing compound to increase the MI of the polymerized product.

The invention is applicable to high or low pressure gas phase processes (but with pressure < 1000 psi [6.9 Mpa]), in which molecular weight control of olefin polymers (or copolymers), produced in the presence of a metallocene catalyst, is effected by controlling the MI of the resulting polymer.

In a preferred embodiments, the process is undertaken in a low pressure fluid bed process for catalytic polymerization or copolymerization of ethylene, in the presence of metallocene catalysts.

The catalyst is a supported catalyst, wherein the support is preferably silica, alumina or silica/alumina: the support is preferably also amorphous and porous. In the preferred catalyst the support is silica.

The MI can additionally be controlled by controlling the polymerization temperature within said range of 55°C to 115°C, the polymerization temperature being selected to be at the higher end of the range to produce product of relatively low MI, and the polymerization temperature being selected to be at the lower end of the range to produce product of relatively high MI.

For increasing the MI of products produced during the polymerization process, the temperature of polymerization is decreased. Thus, if the product MI would be about 0.02 and the need for increasing the product MI above 0.02 is present, then the polymerization is undertaken at temperatures at the lower end of the range of 55°C to 115°C.

For example, the temperature may have to be above 65°C to produce a product MI of less than 4, above 70°C to produce a product MI of less than 3 and above 75-80°C to produce a product MI of less than 2. Conversely, the temperature may have to be below 100°C to produce a product MI of greater than 0.5, below 90°C to produce a product MI of greater than 1 and below 75-80°C to produce a product MI of greater than 2.

The polymerization temperature may be in the range 65 to 90°C, preferably 75 to 80°C.

The polymerization product according to the invention generally has a MI in the range 0.0001 to 500, preferably 0.1 to 500, more preferably 0.1 to 200. Of particular interest are products having a MI in the range of 0.02 to 20.0. It is especially preferred that the MI is in the range of 0.05 to 10, particularly 0.05 to 5.

In accordance with another aspect of the invention there is provided a polymerization product made by the process defined above, said product having a MI less than 500, a settled bulk density in the range of 22 to 36 lb/ft³ (350 to 580 kg/m³) and a density less than 0.94 g/cm³.

For decreasing the MI of products produced during the polymerization process, the temperature of polymerization is increased. Thus, if the product MI would be about 10 and the need for decreasing the product MI is present, then the polymerization is undertaken at temperatures at the higher end of the range of 55°C to 115°C. The temperature range of the process is dependent on the product density. For example, 60 to 90°C is typical for low density (<0.930) products.

As described above, the reagents which are used to decrease MI are electron donating in effect: a preferred group of reagents include oxygen and organic compounds containing oxygen atoms. The reagents which are used to increase MI are electron withdrawing in effect.

In the process according to the invention, the activated catalyst is fluidized by diffusing gas, e.g., recycle gas, through the bed at a rate sufficient to maintain fluidization. Fluidization can be achieved by a high rate of gas recycle to and through the bed, typically in the order of about 200 times the rate of feed of make-up gas.

The olefin feed to the reaction zone of the polymerization reactor comprises ethylene. Ethylene polymers, as well as copolymers of ethylene with one or more C₃-C₁₀ alpha-olefins, can be produced in accordance with the invention. Thus, copolymers having two monomeric units are possible as well as terpolymers having three monomeric units. Particular examples of such polymers include ethylene/1-butene copolymers, ethylene/1-hexene copolymers and ethylene/4-methyl-1-pentene copolymers. Ethylene/1-butene and ethylene/1-hexene copolymers are the most preferred copolymers polymerized in the process of and with the catalyst of this invention.

The ethylene copolymers produced in accordance with the present invention preferably contain at least about 80 percent by weight of ethylene units. The catalyst of this invention may be used to polymerize propylene and other alpha-olefins and to copolymerize them. Preferably, the polymerization (copolymerization) is undertaken at a temperature and/or pressure below the sintering temperature of the polymer particles.

In the general type of polymerization process described herein, pressures are below 10000 psi (69MPa), preferably below 1000psi (6.9 MPa). In low pressure polymerization pressures of up to about 1000 psi (6.9 MPa) are employed.

In accordance with the invention, the fluid bed reactor is operated at pressures of up to about 1000 psi (6.9 MPa). In low pressure polymerization carried out in accordance with the process of the invention pressures are below 400 psi (2.8 MPa), and preferably operation is at a pressure of from about 150 to 350 psi (1 to 2.4 MPa); operation at the higher pressures in such ranges favours heat transfer, since an increase in pressure increases the unit volume heat capacity of the gas. The high activity of the catalysts allow for efficacious low pressure fluid bed gas phase polymerizations.

Much lower activity catalysts may be employed in high pressure processes at pressures which exceed 400 psi (2.8 MPa), such as solution and high pressure slurry polymerizations.

For the production of ethylene copolymers in the process of the present invention an operating temperature of about 55° to 115°C is used. Generally, temperatures of 60° to 90°C are used to prepare products having a density of 0.91 to 0.92; temperatures of 70° to 100°C are used to prepare products having a density of 0.92 to 0.94, and temperatures of 80° to 115°C are used to prepare products having a density of 0.94 to 0.96.

The partially or completely activated catalyst is preferably injected into the fluid bed at a point above the distribution plate at a rate equal to its consumption. Since the catalysts used in the practice of this invention are highly active, injection of the fully activated catalyst into the area below the distribution plate may cause polymerization to begin there and eventually cause plugging of the distribution plate. Injection into the bed, instead, aids in distributing the catalyst throughout the bed and precludes the formation of localized spots of high catalyst concentration.

The production rate of polymer in the bed is controlled by the steady state rate of catalyst and monomer injection. Since any change in the rate of catalyst injection changes the rate of generation of the heat of reaction, the temperature of the recycle gas is adjusted to accommodate the change in rate of heat generation. Complete instrumentation of both the fluidized bed and the recycle gas cooling system is, of course, necessary to detect any temperature change in the bed so as to enable the control system to make a suitable adjustment in the temperature of the recycle gas. Since the rate of heat generation is directly related to product formation, a measurement of the temperature rise of the gas across the reactor (the difference between inlet gas temperature and exit gas temperature) is determinative of the rate of particulate polymer formation at a constant gas velocity.

The reagents which are used to decrease MI, compared to the MI of products produced in the absence of said reagents, are isopentane and compounds which are electron donating in effect.

Electron donating compounds which have been used and which do decrease MI include oxygen, carbon dioxide, carbon monoxide. A preferred group of reagent compounds which are electron donating in effect include organic compounds which include oxygen atoms. Electron donating reagents which may be used include CO, CO₂, NO, NO2, N₂O ethers, alcohol, peroxides, ketones, esters, thioethers, amines, phosphines, phosphine oxides,and phenols.

The general formulas for these electron donating reagents are: ROR¹, ROH, ROOR¹, RCOR¹, RCOOR¹, RSR¹, RR¹R²N, RR¹R²P, RR¹R²PO where
R-CH₃, C₂H₅, n-C₃H₇, i-C₃H₇, n-C₄H₉, i-C₄H₉, t-C₄H₉, C₆H₅ or other alkyl substituted aryl group;

Where R¹ and R² may be the same or different, and may be H, CH₃, C₂H₅, n-C₃H₇, i-C₃H₇, n-C₄H₉, i-C₄H₉, t-C₄H₉, C₆H₅ or other alkyl substituted aryl group.

These reagents are added in amounts effective to change the MI of the product by decreasing it. In a gas phase, fluid bed reactor the olefin feed is in the presence of about 0.01 to about 1000 ppm molar ratio of these compounds, calculated on the basis of ethylene feed. This compound can be injected into the reaction (polymerization zone) or added as a co-feed, or admixed with recycle gas, or fed into any other feed stream.

Reagents including water and those containing electron withdrawing atoms have also been employed to control MI by increasing MI and include trialkylaluminum, e.g., trimethylaluminum, triethylaluminum, triisobutylaluminum, alkylaluminum chloride, trialkyl borane, and dialkylmagnesium. Some representative formulas are: R₂Mg, RMgCl, R₃Al, R₃B, R₂AlCl, R₂BCl, RAlCl₂, RBCl₂, R₃Al₂Cl₃, R₃B₂Cl₃, where R may be H, CH₃, C₂H₅, n-C₃H₇, i-C₃H₇, n-C₄H₉, i-C₄H₉, t-C₄H₉, C₆H₅ or other alkyl group, or aryl group, or substituted aryl group. These reagents are added in amounts effective to change the MI of the product by increasing it.

Note that although these reagents can change MI, they do not increase fines production.

In a gas phase, fluid bed reactor, the olefin feed is in the presence of about 10 to about 1000 ppm molar ratio of these compounds, calculated on the basis of ethylene feed. In addition to increasing MI the reagent does not increase fines production. This compound can be injected into the reaction (polymerization zone) or added as a co-feed, or admixed with recycle gas, or injected with a comonomer.

Hydrogen may be used as a chain transfer agent in the polymerization reaction of the present invention. The ratio of hydrogen/ethylene employed will vary from 0 to 2, preferably 0 to 0.5, moles of hydrogen per mole of ethylene in the gas phase. Any gas inert to the catalyst and reactants can also be present in the gas stream.

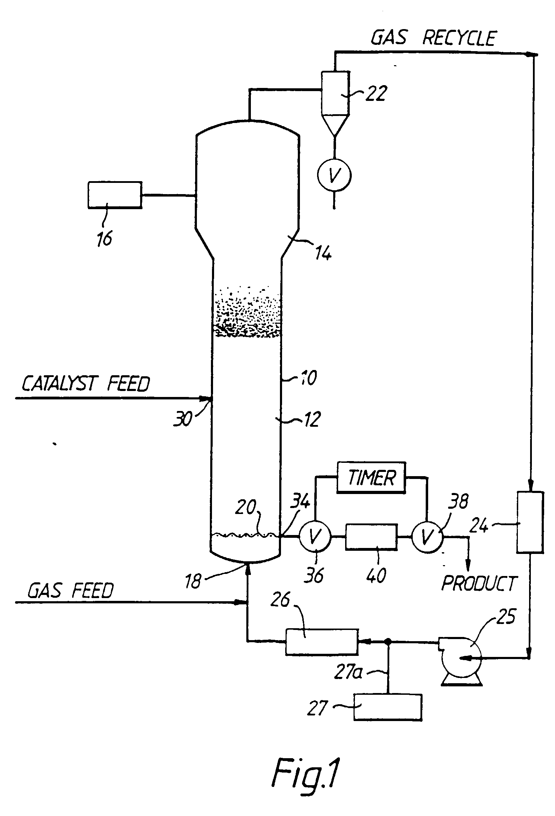

Reference is now made to the accompanying drawing, Figure 1, which is a schematic drawing of a gas phase fluid bed reactor for olefin polymerization or copolymerization, for use in the process according to the present invention.

In Figure 1, a reactor 10 consists of a reaction zone 12, a velocity reduction zone 14 and a distributor plate 20. Although fouling can occur in all of the cold areas (areas in a reactor at a temperature which is less than the temperature at which any component in the gas phase reactor are liquid rather than gaseous) distributor plate fouling is the one most easily detected, since it results in a rapid increase in the pressure drop across the distributor plate due to flow restriction. Such flow restrictions also result in changing fluidization patterns and contribute to reactor operating problems.

The lowest temperature in the reactor loop is in the reactor inlet beneath the distributor plate. Other areas representing the coldest sections in the fluid bed reactor system include the cooler and piping between the cooler and the bottom head.

The reaction zone 12 comprises a bed of growing polymer particles and a minor amount of catalyst particles fluidized by the continuous flow of polymerizable and modifying gaseous components. To maintain a viable fluidized bed, the mass gas flow rate through the bed must be above the minimum flow required for fluidization, and preferably from about 1.5 to about 10 times G_{mf} and more preferably from about 3 to about 6 times G_{mf}. G_{mf} is used in the accepted form as the abbreviation for the minimum mass gas flow required to achieve fluidization, C. Y. Wen and Y. H. Yu, "Mechanics of Fluidization", Chemical Engineering Progress Symposium Series, Vol. 62, p. 100-111 (1966).

The distribution plate 20 serves the purpose of supporting the bed and distributing recycle gas through the bed at a rate sufficient to maintain fluidization of the bed. Fluidization is achieved by a high rate of gas recycle to and through the bed, typically in the order of 50 to 200 times the rate of feed of make-up gas. Make-up gas is fed to the bed at a rate equal to the rate at which particulate polymer product is formed by reaction plus any vent or other losses. The composition of the make-up gas is determined by a gas analyzer usually piped across the compressor. The composition of the make-up gas is continuously adjusted to maintain an essentially steady state gaseous composition within the reaction zone.

The portion of the gas stream which does not react in the bed (the recycle gas) passes a velocity reduction zone 14, where entrained particles are given an opportunity to drop back into the bed, and is compressed in a compressor 25; the gas stream then passes through a heat exchanger 26 and is returned to the bed.

The distribution plate 20 serves the purpose of diffusing recycle gas through the bed at a rate sufficient to maintain fluidization. The plate may be a screen, slotted plate, perforated plate, a plate of the bubble cap type, and the like. The elements of the plate may all be stationary, or the plate may be of the mobile type disclosed in US-A-3298792.

Under a given set of operating conditions, the fluidized bed is maintained at essentially a constant height by withdrawing a portion of the bed as product at a rate equal to the rate of formation of the particulate polymer product. The catalyst is injected into the bed at a point above the distribution plate at a rate equal to its consumption. Injection of the catalyst is via a catalyst feeder. Since the catalysts used in the practice of this invention are highly active, injection of the fully activated catalyst into the area below the distribution plate may cause polymerization to begin there and eventually cause plugging of the distribution plate. Injection into the bed, instead, aids in distributing the catalyst throughout the bed and precludes the formation of localized spots of high catalyst concentration.

The catalyst used in the invention comprises a carrier, aluminium, typically provided by an alumoxane and a transition metal M_{Tr} provided by at least one metallocene. The catalyst is desirably free-flowing and particulate in form comprising dry powder particles having a particle size of from about 1 micron to about 250 microns, preferably from about 10 microns to about 150 microns. The catalysts which contain only one transition metal in the form of a metallocene have an activity of at least about 200 kg polymer/g of transition metals. The aluminoxane and metallocene loading on the carrier is such that the amount of aluminum, (elemental basis) provided by the aluminoxane, on the carrier ranges from 1 to 40 weight percent, preferably from 5 to 30 weight percent, and most preferably from 5 to 15 weight percent. The optimum MAO loading is in the range of 3 to 15 mmoles of aluminum per gram of silica carrier; if a silica carrier is overloaded with MAO, the catalyst activity is lower and the catalyst particles agglomerate with attendant problems of transferring the catalyst.

The amount of metallocene on the carrier ranges, on a transition metal (M_{Tr}) elemental basis, from 0.001 to 10 weight percent, preferably from 0.01 to 1.0, and most preferably from 0.05 to 0.4 weight percent. Accordingly the ratio of Al:M_{Tr} (on an elemental basis) in the catalyst can range from 25 to 10,000, usually within the range of from 50 to 1000 but preferably from about 75 to 500, and most preferably from 100 to 200.

To form catalysts of the invention, all catalyst components can be dissolved with alumoxane and impregnated into the carrier. Catalyst preparation can be undertaken under anhydrous conditions and in the absence of oxygen. In a process described below, the carrier material is impregnated with alumoxane, preferably methylalumoxane. The class of alumoxanes comprises oligomeric linear and/or cyclic alkylalumoxanes represented by the formula: R-(Al(R)-O)ₙ-AlR₂ for oligomeric, linear alumoxanes; and (-Al(R)-O-)ₘ for oligomeric cyclic alumoxane wherein n is 1-40, preferably 10-20, m is 3-40, preferably 3-20, and R is a C₁-C₈ alkyl group and preferably methyl.

MAO is a mixture of oligomers with a very wide distribution of molecular weights and usually with an average molecular weight of about 1200. MAO is typically kept in solution in toluene.

The volume of the solution comprising an alumoxane and a solvent therefor can vary, depending on the catalyst sought to be produced. In a preferred embodiment of alumoxane incorporation into the carrier, one of the controlling factors in the alumoxane incorporation into the carrier material catalyst synthesis is the pore volume of the silica. In this preferred embodiment, the process of impregnating the carrier material is by infusion of the alumoxane solution, without forming a slurry of the carrier material, such as silica, in the alumoxane solution. This is undertaken with agitation. The volume of the solution of the alumoxane is sufficient or less than that required to fill the pores of the carrier material without forming a slurry in which the volume of the solution exceeds the pore volume of the silica; preferably, the maximum volume of the alumoxane solution does not exceed the total pore volume of the carrier material sample: this maximum volume of the alumoxane solution ensures that no slurry of silica in solvent is formed in this step.

By way of example, if the pore volume of the carrier material is 1.65 cm³/g, then the volume of alumoxane will be equal to or less than 1.65 cm³/g of carrier material. Thus, the maximum volume of solution (of metallocene and alumoxane) will equal the total pore volume of the carrier, e.g. silica, which is the pore volume in, e.g., cm³/g, times the total weight of the carrier used. As a result of this provision, the impregnated carrier material will appear dry immediately following impregnation although the pores of the carrier may be filled with inter alia solvent. The preferred solvent for the aluminoxane, e.g. methylalumoxane, is toluene. The advantage is that the impregnation is undertaken in a single solvent system.

Solvent may be removed from the alumoxane impregnated pores of the carrier material by heating and/or under a vacuum or purged with heating in an inert gas, such as nitrogen. If elevated temperature is employed, the temperature conditions in this step are controlled to reduce, if not to eliminate, agglomeration of impregnated carrier particles and/or crosslinking of the alumoxane. In this step, solvent can be removed by evaporation effected at relatively low elevated temperatures in the range of 40 to 60°C to obviate agglomeration of catalyst particles and crosslinking of the alumoxane.

Preferably drying is undertaken at 45°C or less for 5 to 7 hours. Although solvent can be removed by evaporation at relatively higher temperatures than the 40 to 60°C range described above, very short heating times schedules must be employed to obviate agglomeration of catalyst particles and crosslinking of the alumoxane, with reduction of catalyst activity. Thus, an active catalyst has been produced at evaporation temperature of 110°C in less than 10 seconds (at extremely short heating times), whereas at 45°C, drying can be undertaken for periods of 24 hours. A vacuum can be employed to facilitate drying.

In a preferred embodiment, the metallocene is added to the solution of the alumoxane prior to impregnating the carrier with the solution. Again the maximum volume of the alumoxane solution also containing the metallocene is the total pore volume of the carrier material sample. The mole ratio of aluminum provided by aluminoxane, expressed as Al, to metallocene metal expressed as M (e.g. Zr), preferably ranges from 50 to-1000, preferably 75 to 500, and most preferably 100 to 200. The Al:M_{Tr} ratio can be directly controlled.

In a preferred embodiment the alumoxane and metallocene compound are mixed together at ambient temperature for 0.1 to 6.0 hours, prior to use in the infusion step. The solvent for the metallocene and alumoxane can be appropriate solvents, such as aromatic hydrocarbons, halogenated aromatic hydrocarbons, ethers, cyclic ethers or esters; preferably it is toluene.

The metallocene compound has the formula CpₘMAₙBₚ in which Cp is an unsubstituted or substituted cyclopentadienyl group, M is zirconium or hafnium and A and B belong to the group including a halogen atom, hydrogen or an alkyl group. In the above formula of the metallocene compound, the preferred transition metal atom M is zirconium.

In the above formula for the metallocene compound, the Cp group is a mono- or a polysubstituted cyclopentadienyl group. The substituents on the cyclopentadienyl group can be preferably straight-or branched chain C₁-C₆ alkyl groups. The cyclopentadienyl group can be also a part of a bicyclic or a tricyclic moiety such as indenyl, tetrahydroindenyl, fluorenyl or a partially hydrogenated fluorenyl group, as well as a part of a substituted bicyclic or tricyclic moiety. In the case when m in the above formula of the metallocene compound is equal to 2, the cyclopentadienyl groups can be also bridged by polymethylene or dialkylsilane groups, such as -CH₂-, -CH₂-CH₂-, -CR'R"- and -CR'R"-CR'R"- where R' and R" are short alkyl groups or hydrogen, -Si(CH₃)₂-, Si(CH₃)-CH₂-CH₂-Si(CH₃)₂- and similar bridge groups. If the A and B substituents in the above formula of the metallocene compound are halogen atoms, they belong to the group of fluorine, chlorine, bromine or iodine. If the substituents A and B in the above formula of the metallocene compound are alkyl groups, they are preferably straight-chain or branched C₁-C₈ alkyl groups, such as methyl, ethyl, n-propyl, isopropyl, n-butyl, isobutyl, n-pentyl, n-hexyl or n-octyl.

Suitable metallocene compounds include bis(cyclopentadienyl)metal dihalides, bis(cyclopentadienyl)metal hydridohalides, bis(cyclopentadienyl)metal monoalkyl monohalides, bis(cyclopentadienyl)metal dialkyls and bis(indenyl)metal dihalides wherein the metal is zirconium or hafnium, halide groups are preferably chlorine and the alkyl groups are C₁-C₆ alkyls. Illustrative, but non-limiting examples of metallocenes include bis(n-butylcyclopentadienyl)zirconium dichloride, bis(n-butylcyclopentadienyl)hafnium dichloride, bis(n-butylcyclopentadienyl)zirconium dimethyl, bis(n-butylcyclopentadienyl)hafnium dimethyl, bis(n-butylcyclopentadienyl)zirconium hydridochloride, bis(n-butylcyclopentadienyl)hafnium hydridochloride, bis(iso-butyl cyclopentadienyl)zirconium dichloride, bis(pentamethylcyclopentadienyl)zirconium dichloride, bis(pentamethylcyclopentadienyl)hafnium dichloride, bis(isobutylcyclopentadienyl)zirconium dichloride, cyclopentadienylzirconium trichloride, bis(indenyl)zirconium dichloride, bis(4,5,6,7-tetrahydro-1-indenyl)zirconium dichloride, and ethylene-[bis(4,5,6,7-tetrahydro-1-indenyl)]zirconium dichloride.

The metallocene compounds utilized within the embodiment of this art can be used as crystalline solids, as solutions in aromatic hydrocarbons or in a supported form.

The carrier material is preferably a solid, particulate, porous, preferably inorganic material, such as an oxide of silicon and/or of aluminum. In the most preferred embodiment, the carrier is silica in the form of spherical particles, e.g., as obtained by a spray-drying process. The carrier material is preferably used in the form of a dry powder having a particle size of from about 1 micron to about 500 microns, preferably from about 1 micron to about 250 microns, and most preferably about 10 microns to about 150 microns. If necessary, the final catalyst containing carrier material may be sieved to ensure elimination of large catalyst particles. Presently, elimination of catalyst particles that have a particle size of greater than 500 microns is envisaged; preferably, elimination of particles of greater than 250 micron particle size, and, most preferably, elimination of particles of greater than 150 micron particle size is undertaken. Sieving of the material is preferably undertaken after impregnation of the carrier with the metallocene and the aluminoxane. This is particularly desirable when the catalyst contains only one transition metal in the form of a metallocene and which is used to form narrow molecular weight LLDPE, to reduce and/or to eliminate gels in the final polyolefin product and to eliminate reactor hot spots, thereby ensuring reactor continuity, particularly in the gas phase fluid bed process.

The surface area of the carrier is preferably at least 3 m²/g, preferably, 5 to 1200 m²/g and most preferably at least about 50 m²/g up to about 350 m²/g. The pore volume of the carrier will usually range from 0.1 to 5 cm³/g, preferably from 0.1 to 3.5 cm³/gm. The carrier material should preferably be dry, that is, free of absorbed water.

Preferably, the carrier is silica, which contains [OH] groups. The hydroxyl group of the silica may range from greater than 0.5 mmole/g silica to 2.5 mmole/g silica. This range is favoured by lower drying, dehydration and/or calcination temperatures.

The silica hydroxyl (herein silanol, silica hydroxy and silica hydroxyl are used interchangeably) groups are detectable by IR spectroscopy. Quantitative determinations of the hydroxyl concentration on silica are made by contacting a silica sample with methyl magnesium iodide and measuring methane evolution (by pressure determination).

Dehydration of silica material can be effected by heating at 100°C to 600°C, preferably from 150°C to 300°C and most preferably at 250°C.

Silica dehydrated at 600°C (for about 16 hours) will have a surface hydroxyl concentration of about 0.7 mmole/g silica. Silica dehydrated at 800°C will be a silica with 0.5 mmole of silica hydroxy per gram silica. The silica of the most preferred embodiment is a high surface area, amorphous silica (surface area = 300 m²/g; pore volume of 1.65 cm³/g), and it is a material marketed under the tradenames of Davison 952 or Davison 955 by the Davison Chemical Division of W. R. Grace and Company. As purchased, the silicas are not dehydrated and must be dehydrated prior to use.

The effect of silica hydroxyl groups on the catalyst activity and productivity is reflected in the Examples below. To produce the highest activity catalysts the silica should contain hydroxyl groups for contact with the solution containing aluminoxane and metallocene. It has been determined that reaction of the hydroxyl groups of the silica with scavengers, such as trialkylaluminum compounds, e.g., trimethylaluminum (TMA), reduced the activity of the catalyst produced thereby compared to a catalyst formed with a silica having hydroxyl groups unreacted with such a scavenger. Silicas containing higher hydroxyl numbers produce catalysts of higher activity than silicas of lower hydroxyl numbers. Treating the silica with trimethylaluminum to react with the silanol or silica hydroxy groups [which, with appropriate molar amount of TMA, the hydroxyl concentration is reduced to 0 (zero) as indicated by IR] prior to catalyst synthesis produced a catalyst with a productivity of about 200 kg(polymer)/g transition metal. However, this activity is good activity, and the catalyst exhibiting such activity is useful in the processes herein. 3y comparison, catalysts with a hydroxyl group content of 1.8 mmole/g silica exhibits a productivity of more than 1000 kg(polymer)/g transition metal. The amount of hydroxyl groups, in mmole/g silica can be affected by the dehydration temperatures used to condition the silica. Specifically, the dehydration temperatures of about 600°C reduce the amount of reactive hydroxyl groups available for contact with the solution of aluminoxane and metallocene. By comparison, dehydration temperatures of about 250°C increase the amount of reactive hydroxyl groups available for contact with the solution of aluminoxane and metallocene, relative to the silica heat treated, for dehydration purposes, to 600°C. Thus it has been found that the catalyst made with the silica subjected to dehydration temperatures of 250°C is more active than a catalyst produced with the silica subjected to drying temperatures of 600°C. Accordingly, preferred dehydration and/or calcination temperatures are below 300°C and preferably at 250°C.

Accordingly, the silica used in embodiments of the invention will advantageously contain a silanol concentration of greater than 0.7 mmole OH per g silica; preferably it will contain greater than 0.7 mmole up to 2.5 mmole OH per g of silica. In preferred embodiments, the concentration ranges from 1.6 to 2.0 mmole/g silica.

Both low density (0.88 to 0.939 g/cm³) and high density (0.94 to 0.965 g/cm³ and above) products with high bulk density, low (hexane) extractables and granular morphology can be prepared in the slurry or gas phase reactor with no fouling. The resin produced has a high molecular weight, narrow molecular weight distribution, and homogeneous branching distribution. The catalyst ash contains small amounts of Transition metal (eg Zr) and Al: for example, less than 1 ppm transition metal and 100 ppm Al. The high activity of the catalysts of the invention which also exhibit long catalyst life and produce high bulk density products are significant factors in the unexpected efficacy of these catalysts in catalytic polymerizations and copolymerizations of olefins.

Ethylene polymers, as well as copolymers of ethylene with one or more C₃-C₁₀ alpha-olefins, can be produced in accordance with the invention. Thus, copolymers having two monomeric units are possible as well as terpolymers having three monomeric units. Particular examples of such polymers include ethylene/1-butene copolymers, ethylene/1-hexene copolymers and ethylene/4-methyl-1-pentene copolymers.

Ethylene/1-butene and ethylene/1-hexene copolymers are the most preferred copolymers polymerized in the process of and with the catalyst of this invention. The ethylene copolymers produced in accordance with the present invention preferably contain at least about 80 percent by weight of ethylene units.

In one embodiment, the catalyst of the invention exhibits high activity for polymerization of ethylene and higher alpha-olefins and allows the synthesis of ethylene polymers and copolymers with a relatively narrow molecular weight distribution and homogeneous branching distribution. The molecular weight distribution is determined as MFR (melt flow ratio of I_{21/}I₂ - wherein I₂₁ is measured at 190°C in accordance with ASTM D-1238, Condition F, and I₂ is measured in accordance with ASTM D-1238, Condition E]) which ranges from 15 to 25, in polymerizations of the invention. Branching distribution in ethylene copolymers is evaluated on the basis of the resin's melting point. Relatively homogeneous branching distribution is one which the melting point ranges from 100 to 120°C, depending on comonomer composition. In this embodiment, the catalyst of the invention contains only one source of transition metal, a metallocene. More particularly, the copolymer products contain 0.1 to 2 ppm of Zr. The product has an average particle size of 0.015-0.035 inches (0.38 to 0.89 mm), settled bulk density from 22 to 36 lb/ft³ (350 to 580 kg/m³). The narrow molecular weight distribution low density copolymers can been produced with MI from one to 500 and less than 1, down to 0.0001. The low density products of the invention exhibit a MI which can range from 0.0001 to 500, preferably from 0.1 to 500, more preferably from 0.1 to 200. One particularly preferred range of MI is 0.5 to 5.0. The low density products of the invention preferably exhibit a melt flow ratio (MFR) of 15 to 25, more preferably from 14 to 20; products with MFR ranging from 16 to 18 have been made.

When films fabricated from the polymers produced by the process of the invention exhibit balanced tear strength, as measured by ASTM D-1922. Furthermore the LLDPE produced by the invention exhibits Dart Drop Impact values as measured by ASTM D-1709 of greater than 800. The products of the catalysis with the catalyst of the invention are substantially free of gels. The films exhibit very low haze values as measured by ASTM D-1003, preferably in the range of 3 to 10, more preferably from 5 to 7. The catalyst ash typically contains less than 1 ppm transition metal (eg Zr) and less than 40 ppm Al.

Because of the excellent comonomer incorporation of the catalyst and the branching homogeneity of the resin, significant amount of hexene saving can be achieved.

MAO (methylalumoxane) is commercially available from Ethyl Chemical and WITCO (previously Schering Berlin) as 10 weight percent and 30 weight percent solutions, which were the sources of MAO used in the Examples.

### Examples

### Preparation of Catalyst A

This catalyst was prepared using silica treated with TMA. PQ 988 IM silica was dehydrated at 600°C for 4 hours. 486 g of this dehydrated silica were reacted with 517 cm³ of trimethylaluminum (14.8 wt% Al) and dried to a white powder at 80°C.

6.90 g of bis(n-butylcyclopentadienyl) zirconium dichloride, 470 ml of toluene, and 649.7 g of methylaluminoxane (14.1 wt% Al in toluene) were mixed together until the Zr complex dissolved. This catalyst solution was then added slowly into the silica previously treated with trimethylaluminum. The contents were agitated vigorously to make sure the reagent solution was well-dispersed among the silica support.

The mixture was dried at 45°C for 6 hours until a free flowing powder was obtained. The catalyst was not sieved.

### Preparation of Catalysts B to I

These catalysts were prepared using silica without TMA treatment.

Catalyst B: Davison 955 silica was dehydrated at 600°C for 4 hours. 500 g of this dehydrated silica were then reacted with a solution of 7.084 g of (n-butylCp)₂ZrCl₂ dissolved in 677.6 g of MAO (14.1 wt% Al) in toluene. The Al/Zr molar ratio was 200:1. The catalyst was dried under flowing N₂ at 45°C for 6 hours, and was sieved to remove any particles larger than 150 microns.

Catalyst C: Catalyst C was prepared in similar manner to Catalyst B, except that the drying time was 5 hours.

Catalysts D, E, F, G and H: These catalysts were prepared in similar manner to Catalyst C.

Catalyst 8: This catalyst was prepared in similar manner to Catalyst C, except that Davison 955 silica was dehydrated at 250°C.

### Gas phase pilot plant reactor results

The above catalysts were used in the pilot plant fluid bed reactor (13 inch (0.33m) internal diameter, 4ft³ (0.11m³) reaction zone) to evaluate their operability and responses to different process variables. Good reactor operability was achieved after a few adjustments were made to the reactor operating parameters. The catalysts used in this work can be divided into two types based upon the difference in activity. The Catalyst A fits into the low activity group while all the others fit into the higher activity group. All the catalysts in the high activity group should be considered the same for the below discussion.

The resins produced have good settled bulk density (27 to 36 lb/ft³ (430 to 580 kg/m³)) and the fines (defined as finer than 120 Mesh) were less than 5%.

Table 1 gives the results. An analysis of the results in Table 1 demonstrates:
1. Tests 1 and 2 indicate that the Melt Index of the product unexpectedly decreases with increasing temperature.
2. Tests 3 and 4 reconfirm the effect of temperature with a different catalyst formulation which is about three times more active (about one third ash, Al and Zr).
3. Tests 5 and 6 indicate that, as expected, the MI increases as a result of increasing the hexene gas ratio. However, further increase in hexene gas ratio to make low density (test 7) actually decreased melt index, which is unexpected. The difference in ethylene partial pressure between tests 7 and 6 does not explain the MI change. An ethylene partial drop from 206 psi (1.42 MPa) to about 125 psi (0.861 MPa) is required to increase MI from 4.1 (test 7) to 7.1 (test 6).
4. Tests 7 and 8 indicate that MI drops significantly, and unexpectedly, with injection of isopentane into the reactor. This finding is very significant because this gives an effective way of reducing MI to about 1 without usinq a temperature increase which can be detrimental to good reactor operation for low density products.
5. Oxygen reduces MI (compare tests 9 and 10 with 7). Also, addition of oxygen in combination with isopentane (test 12) can give fractional MI resin. This result is unexpected, particularly because the catalyst contains aluminum alkyl. Any oxygen addition was expected to be scavenged by the aluminum alkyl before modifying the catalyst site.
6. Water is found to increase MI (compare tests 7 and 11).
   This result is unexpected since the catalyst contains aluminum alkyl. Any water addition was expected to be scavenged by the aluminum alkyl before modifying the catalyst site.

In addition to isopentane, oxygen and water, other additives were explored, such as TIBA, carbon dioxide, carbon monoxide and acetylene. The results indicated TIBA increases MI, CO₂ and CO decrease MI while acetylene does not have a significant effect. However, all these modifiers do not have the same impact on the catalyst activity in achieving similar changes in MI.

The results are given in Table 2. An analysis of the results in Table 2 demonstrates:
1. Tests 1 and 2 show TIBA increases MI significantly. In addition, the activity of the catalyst increased significantly in the presence of TIBA (compare the Zirconium ppm in the product). Preliminary tests using other electron withdrawing compounds such as TMA and TEAL indicate all of these compounds may not effect the MI similarly on this catalyst.
2. Tests 3 and 4 compared with 2 show that carbon dioxide reduces the MI with this catalyst, which is not expected from the effect of carbon dioxide on other catalysts. Similarly, tests 5 and 6 compared with 2 show carbon monoxide also reduces MI. However, the catalyst activity drops significantly more with carbon monoxide compared to the effect of carbon dioxide (compare 4 and 6).
3. Unlike the results reported in Table 1, where we could make 1 MI using isopentane alone (test 8, Table 1), addition of a modifier was necessary along with isopentane while doing tests reported in Table 2. We believe this is due to difference in the background level of modifiers.
4. Electron donating compounds, e.g. CO, CO2, and electron withdrawing compounds, e.g., TIBA, can modify our metallocene catalysts to change the resin MI. Other electron donating compounds can be ethers, alcohol, peroxides, ketones, esters, thioethers, carbonyls, amines, phosphines, phenols, etc. Other electron withdrawing compounds can be trialkylaluminum, alkyl aluminum chloride, trialkyl borane, etc. It is believed that these modifiers can also work in gas phase, slurry or high pressure process.

Using these catalysts, preliminary product scoping in the fluid bed reactor has been carried out. As a result of the unique combinations of isopentane, hexene, temperature and modifiers that were discovered in this work, it was possible to adjust MI and densities in a very broad range; ranging from 0.915 to 0.962 g/cm³ by varying comonomer level (hexene or butene) and melt index ranging from 0.5 to 250 by varying the reactor temperature, ethylene partial pressure, isopentane, oxygen (or carbon dioxide, carbon monoxide) and hydrogen.

It is believed that significantly lower or higher melt index (less than 0.2 or greater than 500) materials can be produced if necessary. Similarly, it is expected that products can be made with lower density than 0.915 g/cm³ (0.905 g/cm³ or lower) and with higher density than 0.962, if necessary.

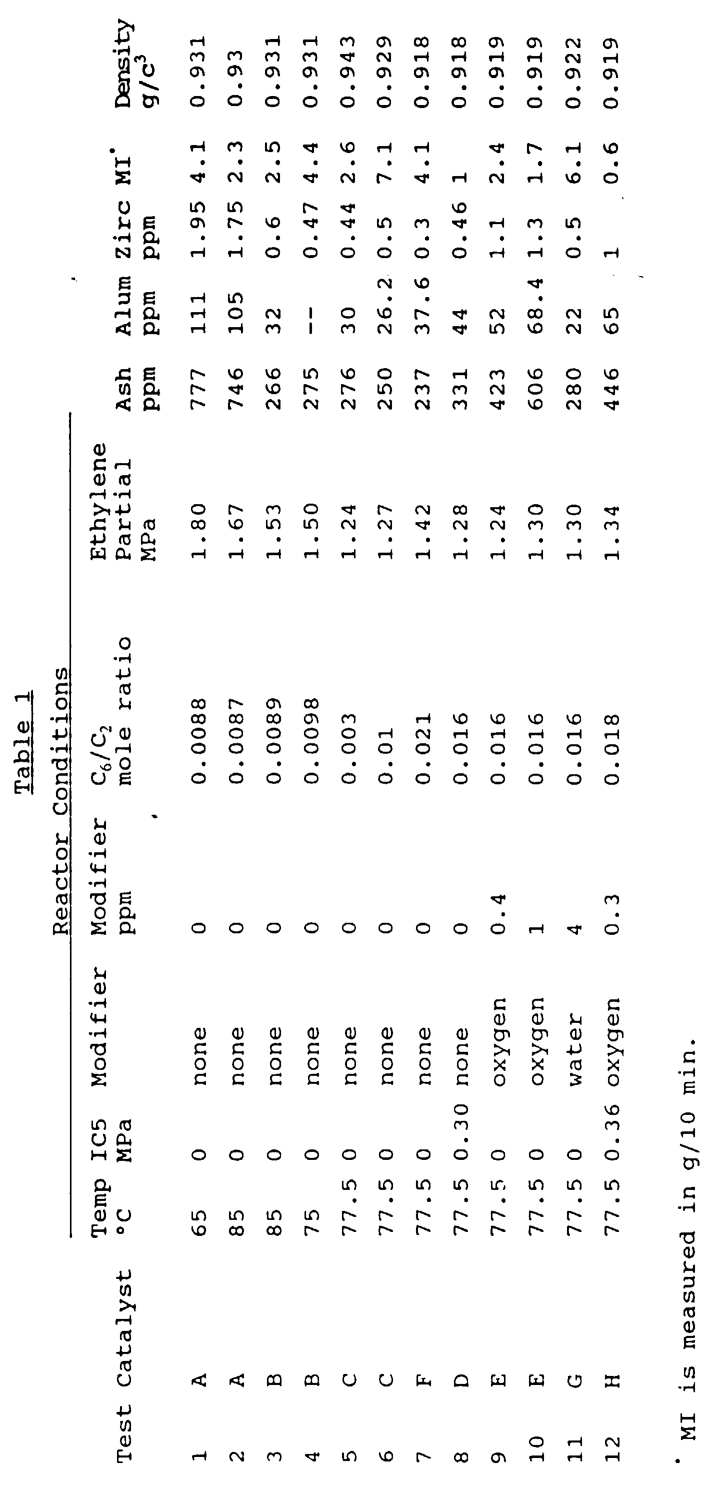

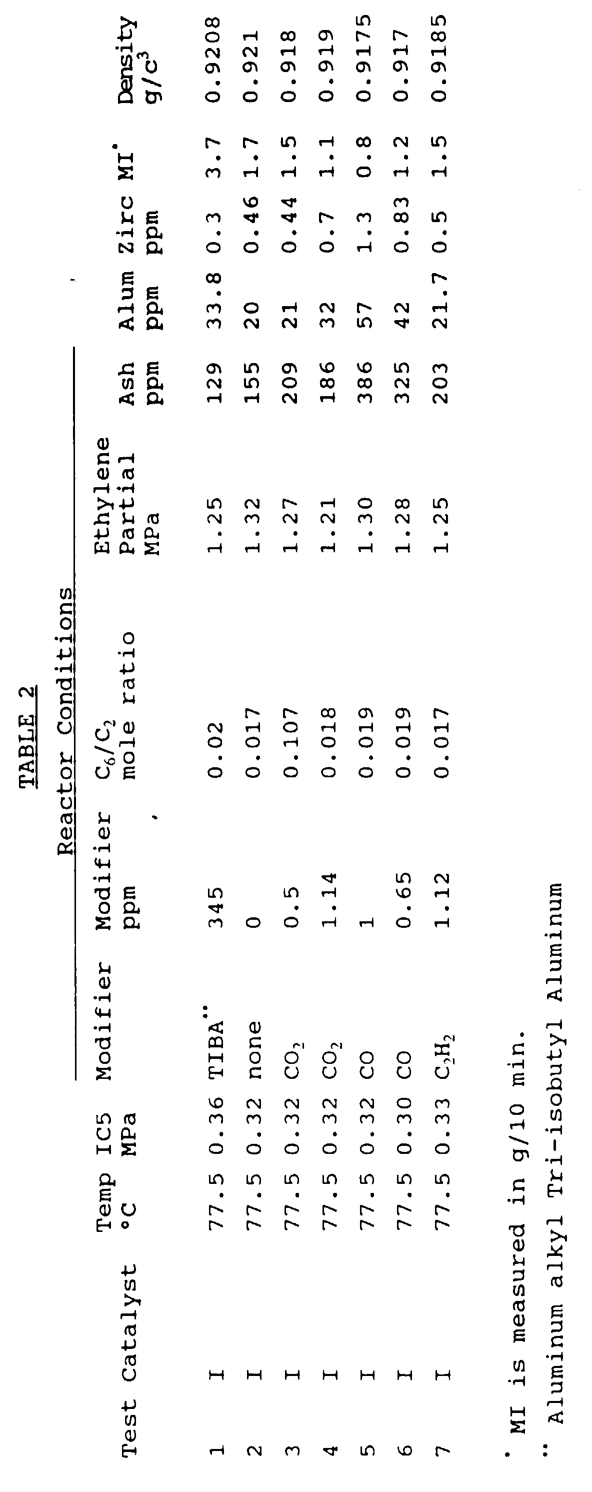

## Claims

1. A process for producing resins having a melt index value in the range of 0.0001 to 500 g/10 min, (wherein MI is measured in accordance with ASTM D-1238, Condition E), which comprises:
(i) polymerising ethylene or copolymerising ethylene with an alpha-olefin having 3 to 10 carbon atoms, using a process comprising:
(a) fluidising a particulate, activated supported metallocene catalyst, in a fluid bed gas phase reactor, wherein the catalyst comprises a support, a transition metal (M_{Tr}), and Al, wherein the amount of M_{Tr} (elemental basis) ranges from 0.001 to 10 weight percent, the amount of Al (elemental basis) ranges from 1 to 40 weight percent and the Al:M_{Tr} ratio (elemental basis) ranges from 25 to 10000;
(b) contacting the catalyst with a feed selected from the group consisting of (1) ethylene, (2) ethylene admixed with hydrogen, (3) ethylene admixed with an alpha-olefin having 3 to 10 carbon atoms, and (4) ethylene admixed with hydrogen and an alpha-olefin having 3 to 10 carbon atoms; and
(c) maintaining a polymerisation pressure of less than 1000 psi (6.9 MPa) and a polymerisation temperature in the range of 50°C to 115°C, to form a polymerised product;
(ii) determining the melt index (MI) of the polymerised product; and
(iii) repeating the process of step (i), including the further step of contacting the fluidised catalyst either with a reagent to increase the MI of the polymerised product or a reagent to decrease the MI of the polymerised product.

2. A process according to Claim 1, wherein the reagent decreases the MI of the polymerised product and is isopentane and/or an electron donating compound.

3. A process according to Claim 2, wherein the reagent is isopentane and is used at a partial pressure of from 2 to 80 psi (14 to 550 KPa).

4. A process according to Claim 2, wherein the reagent is an electron donating compound and is used in an amount ranging from 0.01 to 500 ppm molar ratio of ethylene.

5. A process according to Claim 2, wherein the reagent is an electron donating compound selected from the group consisting of oxygen, carbon monoxide and carbon dioxide.

6. A process according to Claim 2, wherein isopentane is co-fed with an electron donating compounds selected from the group consisting of oxygen, carbon monoxide and carbon dioxide.

7. A process according to Claim 1, wherein the reagent increases the MI of the polymerized product, and is water or an electron withdrawing compound.

8. A process according to Claim 1, wherein the support is silica, alumina or silica/alumina.

9. A process according to Claim 8, wherein the catalyst is in the form of porous amorphous particles having particle size in the range of 1 to 500 microns which comprise silica, and the Al:M_{Tr} ratio ranges from 70 to 350; the silica has a pore volume of 0.1 to 5 cm³/g, and has a concentration of hydroxyl groups in the range of 0 to 2.5 mmole/g of silica; the catalyst is prepared, in activated form, by contacting the silica with a volume of a mixture comprising a metallocene and an alumoxane, wherein the volume of the mixture is no greater than the total pore volume of the silica; the metallocene has a formula, CpₘMAₙBₚ, wherein Cp is a substituted cyclopentadienyl group; m is 1 or 2; M is zirconium or hafnium; and each of A and B is selected from the group consisting of a halogen atom, a hydrogen atom, an alkoxyl group and an alkyl group, providing that m+n+p is equal to the valency of the metal M; the alumoxane has a formula R-(Al(R)-O)ₙ-AlR₂ for oligomeric linear alumoxanes, or has a formula (-Al(R)-O-)ₘ for oligomeric cyclic alumoxanes, wherein n is 1-40, m is 3-40, and R comprises a C₁-C₈ alkyl group.

10. A process according to Claim 9, wherein the metallocene is selected from the group consisting of bis(n-butylcyclopentadienyl)metal dihalides, bis(n-butylcyclopentadienyl)metal hydridohalides, bis(n-butylcyclopentadienyl)metal monoalkyl monohalides, bis(n-butylcyclopentadienyl)metal dialkyls and bis(indenyl)metal dihalides.

11. A process according to Claim 10, wherein the metallocene is bis(isobutylcyclopentadienyl) zirconium dichloride.

12. A process according to Claim 1, wherein the polymerization pressure is maintained at less than 400 psi (2.8 MPa).

## Patentansprüche

1. Verfahren zur Herstellung von Harzen mit einem Wert des Fließindex im Bereich von 0,0001 bis 500 g/10 min (wobei der MI nach ASTM D-1238, Bedingung E gemessen wird), welches umfaßt:
(i) Polymerisation von Ethylen oder Copolymerisation von Ethylen mit einem α-Olefin mit 3 bis 10 Kohlenstoffatomen unter Anwendung eines Verfahrens, welches umfaßt:
(a) Verwirbeln eines partikelförmigen, aktivierten, getragenen Metallocen-Katalysators in einem Wirbelbettreaktor mit Gasphase, wobei der Katalysator einen Träger, ein Übergangsmetall (M_{Tr}) und Al umfaßt, wobei die Menge an M_{Tr} (auf elementarer Basis) von 0,001 bis 10 Gew.-% reicht, die Menge an Al (auf elementarer Basis) von 1 bis 40 Gew.-% reicht und das Verhältnis Al:M_{Tr} (auf elementarer Basis) von 25 bis 10000 reicht;
(b) Kontakt des Katalysators mit einer Beschickung, die aus der Gruppe ausgewählt ist, die aus (1) Ethylen, (2) Ethylen, mit Wasserstoff gemischt, (3) Ethylen, mit einem α-Olefin mit 3 bis 10 Kohlenstoffatomen gemischt, und (4) Ethylen, mit Wasserstoff und einem α-Olefin mit 3 bis 10 Kohlenstoffatomen gemischt, besteht; und
(c) Aufrecherhalten eines Polymerisationsdrucks von weniger als 1000 psi (6,9 Mpa) und einer Polymerisationstemperatur im Bereich von 50 bis 115°C, wodurch ein polymerisiertes Produkt erzeugt wird;
(ii) Bestimmen des Fließindex (MI) des polymerisierten Produktes; und
(iii) Wiederholen des Verfahrens vom Schritt (i), das den weiteren Schritt des Kontaktes des verwirbelten Katalysators entweder mit einem Reagenz, um den MI des polymerisierten Produktes zu erhöhen, oder mit einem Reagenz, um den MI des polymerisierten Produktes zu verringern, umfaßt.

2. Verfahren nach Anspruch 1, wobei das Reagenz den MI des polymerisierten Produktes verringert und Isopentan und/oder eine Elektronendonatorverbindung ist.

3. Verfahren nach Anspruch 2, wobei das Reagenz Isopentan ist und bei einem Partialdruck von 2 bis 80 psi (14 bis 550 kPa) verwendet wird.

4. Verfahren nach Anspruch 2, wobei das Reagenz eine Elektronendonatorverbindung ist und in einer Menge verwendet wird, die im Bereich 0,01 bis 500 ppm Molverhältnis von Ethylen liegt.

5. Verfahren nach Anspruch 2, wobei das Reagenz eine Elektronendonatorverbindung ist, die aus der Gruppe ausgewählt ist, die aus Sauerstoff, Kohlenmonoxid und Kohlendioxid besteht.

6. Verfahren nach Anspruch 2, wobei das Isopentan zusammen mit einer Elektronendonatorverbindung zugeführt wird, die aus der Gruppe ausgewählt ist, die aus Sauerstoff, Kohlenmonoxid und Kohlendioxid besteht.

7. Verfahren nach Anspruch 1, wobei das Reagenz den MI polymerisierten Produktes erhöht und Wasser oder eine Elektronen abziehende Verbindung ist.

8. Verfahren nach Anspruch 1, wobei der Träger Siliciumdioxid, Aluminiumoxid oder Siliciumdioxid/Aluminiumoxid ist.

9. Verfahren nach Anspruch 8, wobei der Katalysator in Form poröser, amorpher Partikel mit einer Partikelgröße im Bereich von 1 bis 500 Mikron vorliegt, die Siliciumdioxid umfassen, und das Verhältnis Al:M_{Tr} im Bereich von 70 bis 350 liegt, wobei das Siliciumdioxid ein Porenvolumen von 0,1 bis 5 cm³/g und eine Konzentration der Hydroxylgruppen im Bereich von 0 bis 2,5 mmol/g Siliciumdioxid hat, wobei der Katalysator in aktivierter Form hergestellt wird, indem das Siliciumdioxid mit einem Volumen einer Mischung, die ein Metallocen und ein Alumoxan umfaßt, in Kontakt gebracht wird, wobei das Volumen dieser Mischung nicht größer als das gesamte Porenvolumen des Siliciumdioxids ist, wobei das Metallocen die Formel CpₘMAₙBₚ hat, worin Cp eine substituierte Cyclopentadienylgruppe ist, m 1 oder 2 ist, M Zirconium oder Hafnium ist und A und B jeweils aus der Gruppe ausgewählt sind, die aus einem Halogenatom, einem Wasserstoffatom, einer Alkoxygruppe und einer Alkylgruppe besteht, vorausgesetzt, daß m+n+p gleich der Valenc des Metalls M ist, wobei das Alumoxan die Formel R-(Al(R)-O)ₙ-AlR₂ für oligomere, lineare Alumoxane oder die Formel (-Al(R)-O-)ₘ für oligomere, cyclische Alumoxane hat, worin n 1 bis 40 ist, m 3 bis 40 ist und R eine C₁-C₈-Alkylgruppe einschließt.

10. Verfahren nach Anspruch 9, wobei das Metallocen aus der Gruppe ausgewählt ist, die aus Bis(n-butylcyclopentadienyl)metalldihalogeniden, Bis(n-butylcyclopentadienyl)metallhydridohalogeniden, Bis(n-butylcyclopentadienyl)metallmonoalkylmonohalogeniden, Bis(n-butylcyclopentadienyl)metalldialkylen und Bis(indenyl)metalldihalogeniden besteht.

11. Verfahren nach Anspruch 10, wobei das Metallocen Bis(iso-butylcyclopentadienyl)zirconiumdichlorid ist.

12. Verfahren nach Anspruch 1, wobei der Polymerisationsdruck bei weniger als 400 psi (2,8 Mpa) gehalten wird.

## Revendications

1. Un procédé de préparation de résines présentant un indice de fluidité dans la fourchette de 0,0001 à 500 g/10 minutes (MI étant mesuré selon ASTM D-1238, condition E) qui comprend :
(i) la polymérisation de l'éthylène ou la copolymérisation de l'éthylène et d'une alpha-oléfine comportant de 3 à 10 atomes de carbone, en utilisant un procédé comprenant :
(a) la fluidisation du catalyseur de métallocène supporté activé particulaire, dans un réacteur en phase gazeuse à lit fluidisé, le catalyseur comprenant un support, un métal de transition (M_{Tr}) et Al, la quantité de M_{Tr} (exprimée en élément) étant comprise entre 0,001 et 10 % en poids, la quantité de Al (exprimée en élément) étant comprise entre 1 et 40 % en poids, et le rapport Al/M_{Tr} (exprimé en élément) étant compris entre 25 et 10000 ;
(b) la mise en contact du catalyseur avec une charge choisie dans le groupe consistant en (1) éthylène, (2) éthylène mélangé avec de l'hydrogène, (3) de l'éthylène mélangé avec une alpha-olféine comportant de 3 à 10 atomes de carbone et (4) de l'éthylène mélangé avec de l'hydrogène et une alpha-oléfine comportant de 3 à 10 atomes de carbone ; et
(c) maintenir une pression de polymérisation inférieure à 1000 psi (6,9 MPa) et une température de polymérisation dans la fourchette de 50 °C à 115 °C pour former un produit polymérisé ;
(ii) détermination de l'indice de fluidité (MI) du produit polymérisé ; et
(iii) la répétition du procédé de l'étape (i), avec une étape supplémentaire de mise en contact du catalyseur fluidisé soit avec un réactif pour augmenter le MI du produit polymérisé ou d'un réactif pour abaisser le MI du produit polymérisé.

2. Un procédé selon la revendication 1, dans lequel le réactif abaisse le MI du produit polymérisé et est l'isopentane et/ou un composé donneur d'électron.

3. Un procédé selon la revendication 2, dans lequel le réactif est l'isopentane et il est utilisé sous une pression partielle d'environ 2 à 80 psi (14 à 550 KPa).

4. Un procédé selon la revendication 2, dans lequel le réactif est un composé donneur d'électron et est utilisé à raison de 0,01 à 500 ppm de rapport molaire d'éthylène.

5. Un procédé selon la revendication 2, dans lequel le réactif est un composé donneur d'électron choisi dans le groupe consistant en oxygène, monoxyde de carbone et dioxyde de carbone.

6. Un procédé selon la revendication 2, dans lequel l'isopentane est amené en même temps que le composé électron donneur choisi dans le groupe consistant en oxygène, monoxyde de carbone et dioxyde de carbone.

7. Un procédé selon la revendication 1, dans lequel le réactif augmente le MI du produit polymérisé et est de l'eau ou un composé attracteur d'électrons.

8. Un procédé selon la revendication 1, dans lequel le support est la silice, l'alumine ou la silice/alumine.

9. Un procédé selon la revendication 8, dans lequel le catalyseur est sous forme de particules amorphes poreuses ayant une dimension particulaire dans la fourchette de 1 à 500 microns et qui comprennent de la silice et le rapport Al/M_{Tr} est compris entre 70 et 350, la silice ayant un volume de pores de 0,1 à 5 cm³/g et une concentration de groupes hydroxyle dans la fourchette de 0 à 2,5 mmoles/g de silice ; le catalyseur étant préparé, sous forme activée, par mise en contact de la silice avec un volume de mélange comprenant un métallocène et un aluminoxane, le volume du mélange n'étant pas supérieur au volume total de pores de la silice, le métallocène ayant une formule CpₘMAₙBₚ, où Cp est un groupe cyclopentadiényle substitué ; m vaut 1 ou 2 ; M est le zirconium ou le hafnium ; et chacun des A et B est choisi dans le groupe consistant en atomes d'halogène, un atome d'hydrogène, un groupe alcoxy et un groupe alkyle, à condition que m+n+p soit égal à la valence du métal M ; l'aluminoxane ayant la formule R-(Al(R)-O)ₙAlR₂ pour des aluminoxanes linéaires oligomères ou présentant la formule (-Al(R)-O-)ₘ pour les aluminoxanes oligomères cycliques, n vaut de 1 à 40, m vaut 3 à 40 et R comprend un groupe alkyle en C₁-C₈.

10. Un procédé selon la revendication 9, dans lequel le métallocène est choisi dans le groupe consistant en dihalogénures de bis(n-butycyclopentadiényl)métal, hydridohalogénures de bis(n-butylcyclopentadiényl)métal, monohalogénures de bis(n-butylcyclopentadiényl)monoalkyl métal, bis(n-butylcyclopentadiényl)dialkyles métal et dihalogénures de bis(indényl)métal.

11. Un procédé selon la revendication 10, dans lequel le métallocène est le dichlorure de bis(isobutylcyclopentadiényl)zirconium.

12. Un procédé selon la revendication 1, dans lequel la pression de polymérisation est maintenue en dessous de 2,8 MPa (400 psi).
